# EUROPEAN PATENT SPECIFICATION

(11) **EP 2 227 633 B1**
(45) Date of publication and mention of the grant of the patent: **23.01.2013**
(21) Application number: 08865641.8
(22) Date of filing: 19.12.2008
(51) Int. Cl.: H01C 7/12

(54) **WIND TURBINE BLADE WITH LIGHTNING RECEPTORS COMPRISING CARBON NANOTUBES**
WINDTURBINENSCHAUFEL UMFASSEND BLITZREZEPTOREN MIT KOHLENSTOFFNANORÖHRCHEN
PALE D'ÉOLIENNE AVEC RÉCEPTEURS DE FOUDRE COMPRENANT DES NANOTUBES DE CARBONE

(30) Priority: 20.12.2007 DK 200701840; 20.12.2007 US 9053 P; 21.12.2007 DK 200701860; 21.12.2007 US 8701
(43) Date of publication of application: 15.09.2010
(73) Proprietor: Vestas Wind Systems A/S, 8200 Aarhus N (DK)
(72) Inventor: JENSEN, Martin Villy Reinbach Skov, DK-8450 Hammel (DK); ERICHSEN, Hans Vagn, DK-8210 Århus V (DK)
(74) Representative: Plougmann & Vingtoft A/S
(86) International application number: PCT/DK2008/050328
(87) International publication number: WO 2009/080048

(56) References cited:
- EP-A- 1 826 402
- EP-A- 1 830 063
- WO-A-02/076430
- WO-A-2007/062659
- WO-A-2007/130979
- WO-A-2008/056123
- DE-A1-102005 045 579
- GB-A- 2 439 215
- US-A1- 2006 207 931

## Description

### FIELD OF THE INVENTION

The present invention relates to wind turbine rotor blade comprising a lightning protection system. In particular, the invention relates to a lightning protection system comprising lightning receptors for capturing lightning strikes. The receptors are arranged in the rotor blade. Moreover, the invention relates to a wind turbine generator with a lightning protection system, to a lightning receptor, and to a method of fabricating a wind turbine rotor blade with a lightning protection system.

### BACKGROUND OF THE INVENTION

Wind turbine generators are tall protruding constructions placed in the open and are therefore typically exposed to lightning strikes. To protect the wind turbine generators from the strikes, the wind turbine rotor blades are normally provided with a lightning protection system. Such systems are generally known and include lightning receptors of an electrically conducting material. Lightning receptors are often mounted in the rotor blades, where they are placed near the tip or other exterior surface. The lightning receptor may capture a strike of lightning and conduct the current through a lightning down-conductor extending in the longitudinal direction of the blade and being earthed via the wind turbine hub.

It is a known problem that the charge involved in a strike is so large that the resulting heating may cause the material of the lightning receptors to vaporize and be removed. This leads to increased inspection of the lightning receptors and increased maintenance in order to repair or replace worn out receptors and possible repair of damages of the rotor blades as well. This leads to unwanted down-time of the wind turbine generators.

The inventors of the present invention have appreciated that an improved lightning protection system of a wind turbine rotor blade would be of benefit, and have in consequence devised the present invention.

### SUMMARY OF THE INVENTION

The present invention seeks to provide an improved wind turbine rotor blade with respect to wear resistance from lightning strikes of the lightning receptors. It may be seen as an object of the present invention to provide a wind turbine generator with low down-time, or even no down-time, due to lightning strikes. Preferably, the invention alleviates, mitigates or eliminates one or more problems of the prior art. DE 10 2005 045579 A1 discloses a wind turbine rotor blade with a lightning protection system comprising lightning receptors.

According to a first aspect of the invention there is provided a wind turbine rotor blade comprising a lightning protection system, wherein the lightning protection system comprises a lightning receptor arranged in the rotor blade, and wherein the lightning receptor comprises carbon nanotubes.

The inventors of the present invention have realized that in connection with lightning strikes a number of factors may be of importance, one factor relates to providing a material with a sufficiently high vaporizing point (latent energy of vaporization), melting point (latent heat of fusion) and/or chemical and thermal stability to sustain the heating arising from the lightning discharge, a second factor relates to providing a material with a high electrical conductance to efficiently lead the currents from the impact area and into the bulk of the receptor, and the third factor relates to a material with a high heat conductance and/or heat capacity to efficiently drain generated heat away from the impact area, and/or to be able to sustain the heat generated from the strike. It is an advantage of the present invention that lightning receptors comprising carbon nanotubes, supports these factors, since carbon nanotubes possess a vaporizing point, chemical and thermal stability, conductivity and thermal properties which are superior to most metals.

In the context of the present invention, a lightning receptor is to be construed as a dedicated or specified region for capturing a strike of lightning and remove the induced currents away from the impact area. This region being a dedicated and/or separate part of the rotor blade typically fabricated separately and intended for mount in the rotor blade.

The carbon nanotubes may be provided at an exterior surface in the form of a layer of carbon nanotubes and/or encapsulated in the lightning receptor so that at least part of the lightning receptor is of a carbon nanotube metal composite material. Carbon nanotubes provided at the surface or in the surface region may have a field enhancing effect whereas the presence of carbon nanotube in the metal composite material can further improve the characteristics of material with respect to increased wear resistance to lightning strikes, such as erosion resistance, e.g. arc erosion resistance, as compared to lightning receptors of a metal composite materials without carbon nanotubes.

The carbon nanotubes may be single-walled carbon nanotubes (SWNT), multi-walled carbon nanotubes (MWNT) or a combination of the two.

Single-walled carbon nanotubes are superior to multi-walled carbon nanotubes with respect to electrical and heat conductivity, however MWNT may be superior to SWNT with respect to resistance to chemical influences from the surrounding environment. It may therefore be an advantage to use a combination of SWNT and MWNT.

Carbon nanotubes may exhibit semiconducting conductivity or metallic conductivity based on the structure of the nanotube. From electrical considerations alone it may therefore be advantageous to use carbon nanotubes with metallic conductivity. However, all types of carbon nanotubes are superior over most metals with respect to thermal conductivity as well as chemical and thermal stability. Improved lightning receptors may therefore be provided from use of carbon nanotubes exhibiting metallic or semiconducting conductivity, or a mixture/combination of the two.

In embodiments the lightning receptor may comprise carbon nanotubes as a surface layer supported by the lightning receptor, encapsulated in a metal matrix composite material, i.e. to form a carbon nanotube metal matrix composite material, or as a surface layer supported by a carbon nanotube metal matrix composite material. The receptor material may comprise a metallic part, however additional non-metal components may be provided as well. In embodiments, the lightning receptor comprises a material selected from the group of: Cu, Co, Cr, W, V, Ag, Ni, Au, Al, Pb, Mg, Sn, Zn, Ti, Mo, Zr, Mn, Fe, In, Ir, Nb, Ta, Re, Pd, Os, Rh, Ir, Pt, Ru, C, CuW, CuWAg, CuSn, CuNi, CuBe, CuZn, CuAg, CuCd, CuCr, CuZr, CuCrZr, CuTe, CuC, AgCdO, AgSnO₂, AgSnO₂In₂O₃, AgZnO, AgCdOSnO₂, AgMgONiO, AgW, AgWC, AgWO₂, AgWO₃, AgMo, AgC, AgNi, AgPd, AgCuNi, ReW, metal-matrix composites of Cu, Ag, W, Mo, Ni, Cr, Ti, V, Zr, Mn, Ta, Fe or Nb with additions of oxides, Inconel, Constantan, Monel, Invar, Hastelloy, Cu-Al₂O₃ (e.g. GlidCop), stainless steel, steel, or any alloy or composite thereof.

The lightning receptor may be provided with one or more electric field enhancing protrusions to the exterior surface of the receptor to further improve the lightning receptors, since the electric field strength may be increased in the vicinity of a protrusion extending outwards from the exterior surface of the receptor. Upon lightning strike, edges of the lightning receptors are prone to loose more material than central parts of the lightning receptors. When material is removed at the edge of the receptor, this may have an electric field enhancing effect which further increases the probability of lightning strike in the edge area. It is however desirable to remove the impact area away from the edge due to a risk of damaging the rotor blade itself from the strike, and thereby further increasing the maintenance requirement. It may therefore be advantageous to provide field enhancing protrusions to the exterior surface, to remove the impact area away from the edge area. As a further advantage even if material is removed from the lightning strike, the material is removed in an area which is distanced from the edge, and thereby diminish the probability of affecting the rotor blade itself from a lightning strike.

The dependent claims define advantageous embodiments of specific electric field enhancing geometries.

In embodiments, the carbon nanotubes are provided in the form of a surface layer at an exterior surface of the receptor. The carbon nanotubes of such a surface layer may themselves function as electric field enhancing protrusions. To further improve the field enhancing effect, the layer of carbon nanotubes may be patterned in accordance with a pattern mask. In embodiments, a patterned carbon nanotube layer may be provided onto an exterior surface with a surface topography comprising field enhancing protrusions.

In embodiments, the carbon nanotubes may be substantially vertically aligned along directions being normal to a surface plane of the exterior surface or substantially vertically aligned along a normal direction of a reference surface plane. The reference surface plane may e.g. be the surface plane of the blade abutting the receptor. Carbon nanotubes possess superior heat and electrical properties along the tube axis of the nanotubes. It is therefore advantageous to align the nanotubes so that the impact area of the lightning strikes is substantially at ends of the tubes, and that the tube axes extend along a direction extending from the impact area to the exterior surface of the receptor. Such alignment may be obtained using substantially vertically aligned carbon nanotubes.

In embodiments, the carbon nanotubes are provided in the form where they are encapsulated into the bulk material of the lightning receptor, so that at least part of the lightning receptor is of a carbon nanotube metal composite material. It may be advantageous that the carbon nanotubes are substantially homogeneously distributed in the metal matrix material over at least a substantial part of the entire thickness of the metal matrix material, thereby providing a lightning receptor at least substantially without weak areas. By homogeneously distributing the carbon nanotubes in the metal matrix a material is provided which can be worked with standard metalworking techniques, such as extrusion, forging, rolling, machining, etc., even though special tools suitable for hard materials may be required.

In an embodiment, the carbon nanotubes are substantially randomly oriented in a metal matrix material. In a fabrication process it may be simpler to provide the nanotubes in a substantial randomly oriented manner.

In an embodiment, at least an ensemble of the carbon nanotubes is oriented along a direction extending along a thickness of the receptor. Carbon nanotubes possess superior heat and electrical properties along the tube axis of the nanotubes. It may therefore be advantageous to align the nanotubes so that heat and current are directed away from the receptor and thereby avoiding dispersion of the heat and current in the bulk of the lightning receptor. The direction of the orientation may be controlled by application of electric or magnetic field in connection with the fabrication of the carbon nanotube metal composite.

In an embodiment, the carbon nanotubes are dispersed in a continuous metal matrix, thereby providing a lightning receptor with increased strength. In a continuous metal matrix there is a metal path through the matrix to any point in the material. Moreover, in a continuous metal matrix impurities and cavities, such as air bubbles, are avoided or at least only present to a very low extend.

In an embodiment, at least a portion of the carbon nanotubes are in physical contact with each other, thereby increasing the probability of directing heat and current away from the receptor instead of dispersing the heat and current in the bulk of the lightning receptor.

In an embodiment, the volume fraction of the carbon nanotubes is in the range of 5% to 75%, such as 10% to 60%, such as 15% to 50%, such as 20% to 40%, such as 30%.

Such factors as degree of alignment of the carbon nanotubes, or no alignment (randomness) of the carbon nanotubes, the degree of physical contact between the carbon nanotubes, or no physical contact between the carbon nanotubes and the specific volume fraction of the carbon nanotubes, may be varied in order to tailor the specific properties of the lightning receptor.

According to a second aspect of the present invention there is provided, a wind turbine generator comprising one or more rotor blades, wherein the one or more rotor blades comprise a lightning protection system, wherein the lightning protection system comprises a lightning receptor arranged in the rotor blade, and wherein the lightning receptor comprises carbon nanotubes. A wind turbine generator with improved lightning protection may thereby be provided. According to a third aspect of the present invention there is provided, a lightning receptor for a wind turbine rotor blade, wherein the lightning receptor comprises carbon nanotubes.

The lightning receptors according to the second and third aspects may be provided in accordance with the lightning receptor described in connection with the first aspect of the invention.

According to a fourth aspect of the invention there is provided a method of fabricating a wind turbine rotor blade with a lightning protection system, the method comprising:
- providing a wind turbine rotor blade having a receptor location for receiving a lightning receptor;
- providing the lightning receptor according to embodiments of the first aspect of embodiments of the first aspect of the present invention;
- mounting the receptor in the receptor location on the rotor blade;
- establishing electrical contact from the lightning receptors to an electrical down-conductor.

The lightning receptors may be fabricated prior to mounting the receptor in a receptor location on the rotor blade. Thereby rendering it possible for an owner of a wind turbine generator to update an existing lightning protection system with a protection system in accordance with the present invention.

In embodiments, the carbon nanotubes may be grown onto the exterior surface of the lightning receptors by providing islands or particles of catalytic material, e.g. Ni or Mo or other catalyst particles, to the exterior surface and growing the carbon nanotubes from the catalytic material, e.g. by use of such techniques as chemical vapour deposition (CVD), plasma-enhanced CVD (PE-CVD), physical vapour deposition (PVD) and arc disharge. Catalytic growth of carbon nanotubes onto the surface plane of a substrate is a versatile and well-known method of growing carbon nanotubes.

The carbon nanotubes may be grown vertically aligned along an orientation direction. The direction of the orientation may be controlled by use of masking or by application of electric or magnetic fields in connection with the growth as is known in the art. Techniques for growing vertically aligned carbon nanotubes are known in the art.

In embodiments, the layer of carbon nanotubes may be patterned. Patterning of the carbon nanotube layer may be achieved by patterning of the catalyst material. Catalyst material patterning may be obtained by lithography techniques, liquid dispersion techniques, etching, etc. Patterning methods are known in the art.

In embodiments, the carbon nanotube metal composite is fabricated by a liquid state fabrication method, a vapour state fabrication method or a powder-metallurgical method.

A number of liquid state fabrication methods exist. Such methods include, but are not limited to electroplating or electroforming methods where a solution containing metal ions loaded with carbon nanotubes is co-deposited forming a composite material, and stir casting methods where carbon nanotubes are stirred into molten metal, which is allowed to solidify.

An example of vapour state fabrication include, but is not limited to physical vapour deposition methods, where the carbon nanotubes are passed through a thick cloud of vaporized metal, coating it.

In a powder-metallurgical fabrication, the material components in powder form are provided into a mould where the powder is exposed to high pressure and high temperature. In order to provide a material with a sufficient strength, it may be necessary to apply such high temperatures and pressures that the material reorders to a certain degree.

In general, the individual aspects of the present invention may each be combined with any of the other aspects. These and other aspects of the invention will be apparent from the following description with reference to the described embodiments.

### BRIEF DESCRIPTION OF THE FIGURES

Embodiments of the invention will be described, by way of example only, with reference to the drawings, in which
FIG. 1 schematically illustrates a wind turbine generator with three rotor blades equipped with lightning receptors;
FIG. 2 schematically illustrates in cross-sectional view, a number of embodiments of receptors where the exterior surface is provided with one or more field enhancing protrusions;
FIG. 3 schematically illustrates in top view, an embodiment of distributed field enhancing protrusions;
FIG. 4 schematically illustrates a lightning receptor provided at an exterior surface with a layer of carbon nanotubes;
FIG. 5 schematically illustrates a lightning receptor provided in a carbon nanotube metal composite material;
FIG. 6 schematically illustrates the combined system of FIG. 4 and 5;
FIGS. 7A and 7B schematically illustrate in cross-sectional view, field enhancing protrusion provided with a layer of carbon nanotubes;
FIGS. 8A and 8B schematically illustrate in cross-sectional view, lightning receptors where the layer of carbon nanotubes is patterned in accordance with a pattern mask; and
FIG. 9 illustrates a flow diagram of an embodiment of a method of fabricating a wind turbine rotor blade with a lightning protection system.

### DESCRIPTION OF EMBODIMENTS

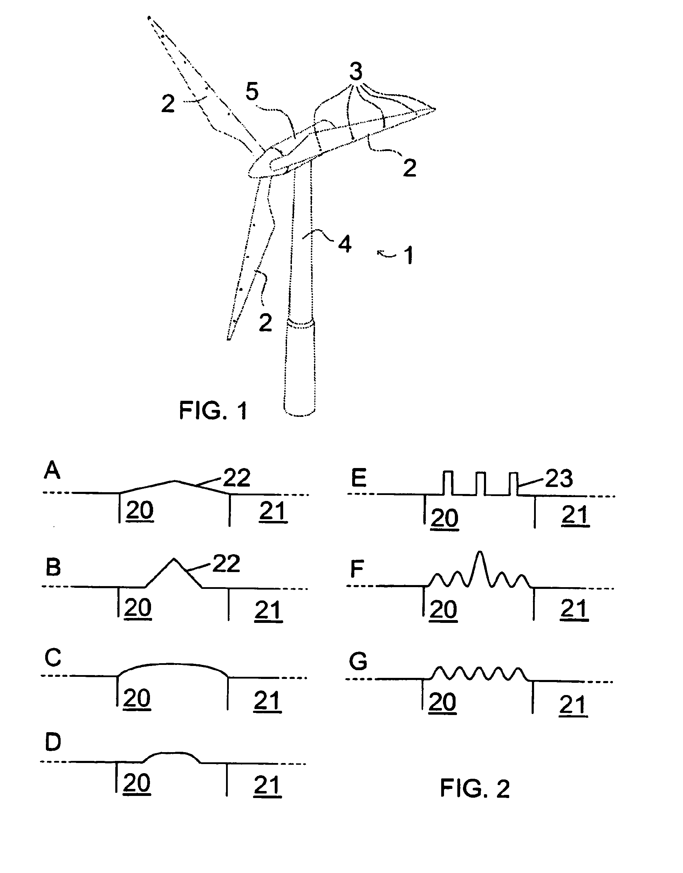

FIG. 1 schematically illustrates a wind turbine generator (WTG) 1 with three rotor blades 2 equipped with lightning receptors 3. Moreover, the WTG 1 comprises a tower 4 and a nacelle 5. The lightning receptors 3 are electrically connected to a down-conductor (not shown). The lightning receptors 3 are mounted at the surface of the blade 2 in order to capture the lightning at these specific positions. On the shown WTG 1, five receptors are mounted on each rotor blade, it is however to be understood that the scope of the present invention is not limited to a specific number of receptors or to a specific location or arrangement of the receptors. Lightning receptors may be mounted on both sides of the rotor blades. It is to be understood, that the invention is not limited to the type of WTG or rotor blades illustrated. The WTG is merely shown for illustrative reasons.

FIG. 2 schematically illustrates in cross-sectional view, a number of embodiments of receptors 20 arranged in a rotor blade 21, where the exterior surface of the receptors is provided with one or more field enhancing protrusions. The scope of the invention is not limited to the embodiments shown in the Figure, any type of field enhancing protrusions within the scope of the invention is possible. Moreover, the schematic illustrations are not accurate representations in the sense of engineer or technical drawings. The illustrations are merely provided in order to illustrate various features of embodiments of the present invention. The illustrated embodiments provide examples of specific field enhancing protrusions.

In the embodiment as shown in FIG. 2A, a single centrally placed tip-shaped field enhancing protrusion is illustrated, the tip-shaped protrusion is pointing generally outwards from the exterior surface and is extending the entire exterior surface.

In the embodiment as shown in FIG. 2B, a single centrally placed tip-shaped field enhancing protrusion is illustrated, the tip-shaped protrusion is pointing generally outwards from the exterior surface and is extending a central part of the exterior surface.

In FIGS. 2A and 2B the rising surface 22 of the protrusion is illustrated to be a straight or plane surface. Other embodiments include, but are not limited to, concave or convex rising surfaces.

In the embodiment as shown in FIG. 2C, a single centrally placed arc-shaped field enhancing protrusion is illustrated, the arc-shaped protrusion is protruding generally outwards from the exterior surface and is extending the entire exterior surface.

In the embodiment as shown in FIG. 2D, a single centrally placed arc-shaped field enhancing protrusion is illustrated, the arc-shaped protrusion is protruding generally outward from the exterior surface and is protrusion is extending a central part of the exterior surface.

In FIGS. 2C and 2D the curvature of the exterior surface of the field enhancing protrusions are illustrated to be rather low. Other embodiments include, but are not limited to, hemispherical shaped field enhancing protrusions.

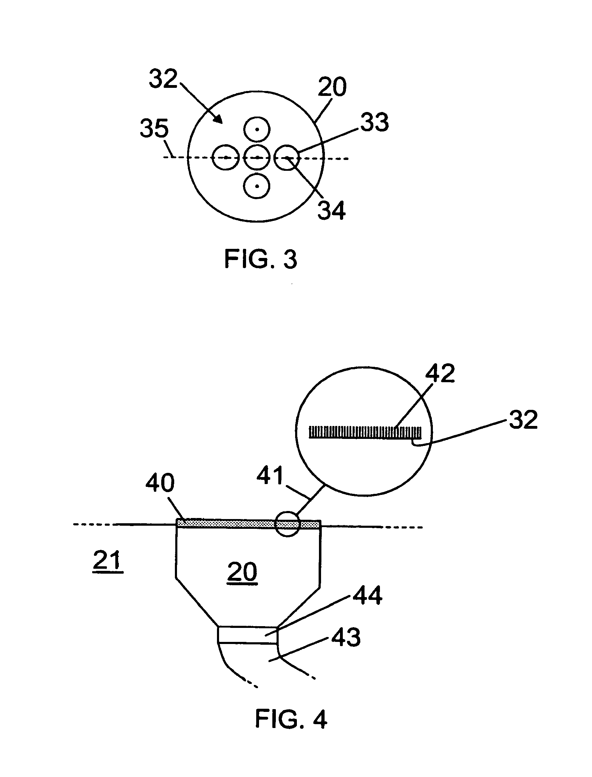

In the embodiment as shown in FIG. 2E, three distributed cylinder shaped field enhancing protrusions are illustrated. The cross-section may e.g. be obtained along a section as denoted by reference numeral 35 on FIG. 3.

In FIG. 2E the rising surface 23 may also be provided with an angle in order to provide protrusion having a truncated cone shape. Moreover, the rising surface, especially in the truncated cone embodiment, may be of a concave or convex rising shape.

In the embodiments as shown in FIGS. 2F and 2G the one or more field enhancing protrusions constitute a generally wave-shaped exterior surface. The wave-shape may e.g. be circularly symmetric around a centre point, i.e. the field enhancing protrusions may be build up of a central crest and two concentric crests.

In FIG. 2F, the central wave-formed protrusion comprises a larger amplitude than the wave-formed protrusion position away from the centre. In FIG. 2G, all the wave-formed protrusions comprise the same amplitude.

In FIGS. 2A to 2G different numbers of protrusion are illustrated, it is however to be understood, that any number of protrusions may be provided in any of the illustrated embodiments.

In embodiments, the size of the lightning receptor may be in the centimetre (cm) range, such as possessing a diameter or other relevant width in the range of 0.5 to 5 cm, such as 1.5 cm.

In embodiments, the height of the field enhancing protrusions may be in the range between some millimetre (mm) to a few centimetres, such as a between 1 mm to 10 mm, or larger.

FIG. 3 schematically illustrates in top view, an embodiment of distributed field enhancing protrusions. In the illustrated embodiment, the receptor 20 possess a round cross-section, however, the shape of the receptor can be of any suitable shape. The exterior surface 32 is provided with five field enhancing protrusions 33, each of circular cross-section and with the centre marked 34. In the illustrated embodiment, a single centrally placed protrusion is provided encircled by four additional protrusions. It is however to be understood, that the exterior surface may in general be provided with or without a centrally placed protrusion, as well as with any number of individual protrusions. The protrusions may be of any shape within the scope of the invention.

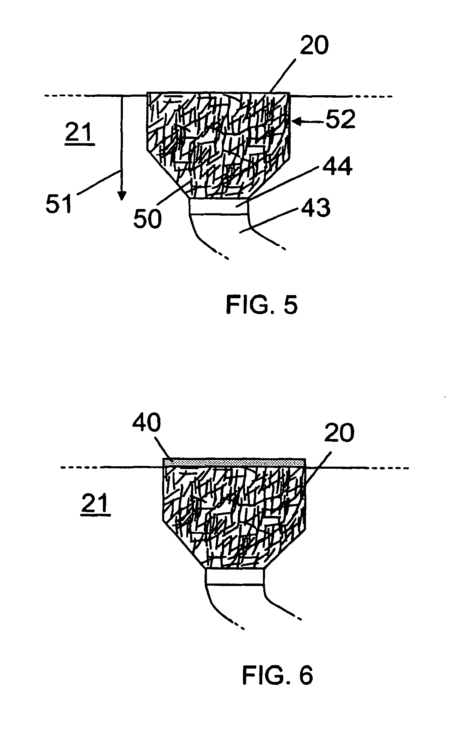

FIG. 4 and 5 schematically illustrates, in cross-section, elements of a lightning protection system in accordance with embodiments of the present invention.

FIG. 4 schematically illustrates a lightning receptor 20 arranged in the rotor blade 21, where the lightning receptor is at an exterior surface provided with a layer 40 of carbon nanotubes. The insert 41 schematically illustrates an enlargement of the layer 40, where the enlargement schematically illustrates individual carbon nanotubes 42 protruding from the exterior surface 32 of the lightning receptor.

The receptor is schematically illustrated as being connected to a down-conductor 43 for leading away any induced currents from a lightning strike. The lightning receptor may be connected to a down-conductor in any suitable way. Moreover, the lightning receptor may be fixed in the rotor blade by any suitable means. In an embodiment, the lightning receptor is secured in a holder unit 44.

FIG. 5 schematically illustrates a lightning receptor 20 arranged in the rotor blade 21, where the material of the lightning receptor is of a carbon nanotube metal composite material, as schematically indicated by the plurality of carbon nano tubes 50. In general, however, only a part of the lightning receptor may be of a carbon nanotube metal composite material. For example, an upper part may be of a carbon nanotube metal composite material, whereas the lower part may be of a standard light receptor material, such as a metal or metal alloy. In general, the part comprising carbon nanotube metal composite material may be the part facing the exterior of the wind turbine rotor blade.

The carbon nanotubes may be substantially homogeneously distributed in the receptor, and the carbon nanotubes may be substantially randomly oriented in the entire thickness 51 of the receptor. In the illustrated embodiment, at least a portion of the carbon nanotubes are in physical contact with each other 52.

The scope of the invention is not limited to the embodiment shown in the FIG. 5. Typically homogeneously distributed carbon nanotubes are preferred over inhomogeneously distributed carbon nanotubes. The homogeneity is typically across the entire size of the receptor, thus at small size-scale, small compared to the size of the receptor, the distribution of the carbon nanotubes may be somewhat inhomogeneous. In general, the carbon nanotubes need not be randomly oriented and need not be in physical contact with each other. Orienting the nanotubes, e.g. along the direction along the thickness 51 of the receptor, however may improve the material properties of the receptor even further.

As an alternative embodiment as to the embodiment of FIG. 5, the material of the lightning receptor may be of a metal material provided with sheets of graphene embedded therein. The sheets of graphene may be provided to extend the entire or only part of the lightning receptor. The sheet of graphene may generally be oriented along a direction along the thickness 51 of the receptor. Sheets of graphene may have similar properties as distributed carbon nanotubes.

FIG. 6 schematically illustrates the combined system of FIG. 4 and 5 where the lightning receptor 20 is at an exterior surface provided with a layer 40 of carbon nanotubes combined with that the material of the lightning receptor is of a carbon nanotube metal composite material.

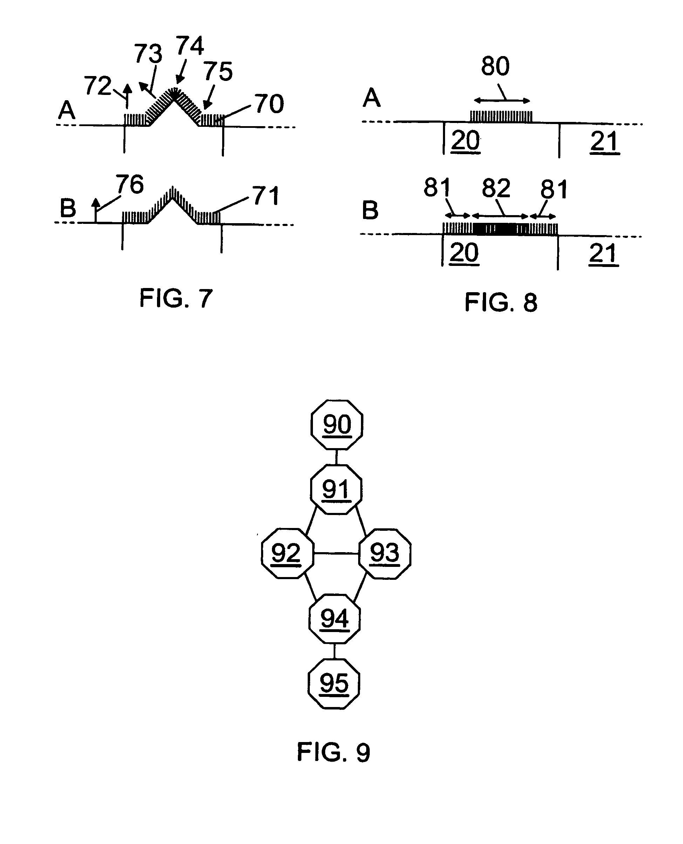

FIGS. 7A and 7B schematically illustrate in cross-sectional view, the field enhancing protrusion of FIG. 2B, however provided with a layer of carbon nanotubes 70, 71.

In both FIG. 7A and FIG. 7B, the carbon nanotubes are substantially vertically aligned. However, in FIG. 7A, the carbon nanotubes are substantially vertically aligned along directions being normal to a surface plane of the exterior surface. That is, the carbon nanotubes are vertically aligned along directions perpendicular to the local substrate, as denoted 72 and 73. At outwardly pointed locations 74, the carbon nanotubes may easily accommodate to the varying local geometry of the substrate, however, at inwardly pointed locations 75, the carbon nanotubes may bend or by other means accommodate to the varying local geometry of the substrate.

In FIG. 7B, the carbon nanotubes are substantially vertically aligned along a normal direction of a reference surface plane. For example the carbon nanotubes may be vertically aligned along a direction 76 perpendicular to surface plane of blade in the vicinity of the receptor.

FIGS. 8A and 8B schematically illustrate, in cross-sectional view, lightning receptors where the layer of carbon nanotubes is patterned in accordance with a pattern mask. The patterning may be provided by patterning the catalytic material from which the nanotubes are grown. In FIG. 8A, the layer have been masked so that the carbon nanotubes are only provided at a centre area 80. In FIG. 8B, the layer have been masked so that the carbon nanotubes cover the entire exterior surface, however, at edge or rim 81, the density of the carbon nanotubes is lower than the density at the centre 82. In both embodiments, the masking of the carbon nanotubes has a field enhancing effect, attracting the lightning strike towards the centre region of the lightning receptor. It is to be understood, that a number of masking patterns are possible, and that the invention is not limited to those of FIGS. 8A and 8B.

Carbon nanotubes may be provided with a large variety of lengths. In different embodiments, the carbon nanotubes may be of different lengths, as well as the layer of carbon nanotubes and/or the carbon nanotube metal composite may be provided with carbon nanotubes exhibiting a length distribution.

FIG. 9 illustrates a flow diagram of an embodiment of a method of fabricating a wind turbine rotor blade with a lightning protection system. The method comprises the step of providing 90 a wind turbine rotor blade having a receptor location for receiving a lightning receptor. The receptor locations may be provided in connection with fabricating the rotor blade; or they may be provided in a post fabrication process.

The lightning receptors may be provided 91 in a separate fabrication process. In an embodiment of the fabrication process of the lightning receptors, the receptors are first provided 91, e.g. in a moulding, casting or powder-metallurgical process. The process may in embodiments comprise processing steps 92 to ensure that at least part of the lightning receptor is of a carbon nanotube metal composite material and/or the process may in embodiments comprise processing steps which provides a layer of carbon nanotubes 93 onto an exterior surface of the receptor. The receptors are mounted 94 in the receptor location on the rotor blade and electrical contact from the lightning receptors to an electrical down-conductor is established 95.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. Furthermore, individual features mentioned in different claims, may possibly be advantageously combined, and the mentioning of these features in different claims does not exclude that a combination of features is not possible and advantageous.

## Claims

1. A wind turbine rotor blade comprising a lightning protection system, wherein the lightning protection system comprises a lightning receptor arranged in the rotor blade, **characterized in that** the lightning receptor comprises carbon nanotubes.

2. The wind turbine rotor blade according to claim 1, wherein the carbon nanotubes is provided at an exterior surface in the form of a layer of carbon nanotubes and/or in the form where at least part of the lightning receptor is of a carbon nanotube metal composite material.

3. The wind turbine rotor blade according to any of the preceding claims, wherein the carbon nanotubes are single-walled carbon nanotubes, multi-walled carbon nanotubes or a combination of the two.

4. The wind turbine rotor blade according to any of the preceding claims, wherein the exterior surface of the receptor is provided with one or more electric field enhancing protrusions.

5. The wind turbine rotor blade according to claim 4, wherein the one or more field enhancing protrusions comprise one or more pointed protrusions pointing generally outward from the exterior surface.

6. The wind turbine rotor blade according to claim 4, wherein the one or more field enhancing protrusions comprise arc shaped protrusions.

7. The wind turbine rotor blade according to claim 4, wherein the one or more field enhancing protrusions constitute a generally wave shaped exterior surface.

8. The wind turbine rotor blade according to claim 4, wherein the one or more field enhancing protrusions comprise cylinder shaped protrusions.

9. The wind turbine rotor blade according to any of the claims 2-8, wherein the layer of carbon nanotubes comprises carbon nanotubes which are substantially vertically aligned along directions being normal to a surface plane of the exterior surface.

10. The wind turbine rotor blade according to any of the preceding claims, wherein at least an ensemble of the carbon nanotubes is oriented along a direction extending along a thickness of the receptor.

11. The wind turbine rotor blade according to any of the preceding claims, wherein the carbon nanotubes are dispersed in a continuous metal matrix.

12. A wind turbine generator comprising one or more rotor blades, each rotor blade being a rotor blade according to any of the preceding claims.

13. A method of fabricating a wind turbine rotor blade with a lightning protection system according to any of the claims 1 to 11, the method comprising:
- providing a wind turbine rotor blade having a receptor location for receiving a lightning receptor;
- providing the lightning receptor;
- mounting the receptor in the receptor location on the rotor blade;
- establishing electrical contact from the lightning receptors to an electrical down-conductor.

14. The method according to claim 13, wherein the carbon nanotubes are grown onto the exterior surface of the lightning receptors by providing islands or particles of a catalytic material to the exterior surface and growing the carbon nanotubes from the catalytic material.

## Patentansprüche

1. Rotorblatt einer Windkraftanlage, umfassend ein Blitzschutzsystem, wobei das Blitzschutzsystem einen Blitzrezeptor umfasst, der in dem Rotorblatt angeordnet ist, **dadurch gekennzeichnet, dass** der Blitzrezeptor Kohlenstoffnanoröhrchen umfasst.

2. Rotorblatt einer Windkraftanlage nach Anspruch 1, wobei die Kohlenstoffnanoröhrchen an einer Außenfläche in Form einer Schicht aus Kohlenstoffnanoröhrchen und/oder in der Form bereitgestellt werden, in der mindestens ein Teil des Blitzrezeptors aus einem Kohlenstoffnanoröhrchen-Metall-Verbundmaterial hergestellt ist.

3. Rotorblatt einer Windkraftanlage nach einem der vorhergehenden Ansprüche, wobei die Kohlenstoffnanoröhrchen einwandige Kohlenstoffnanoröhrchen, mehrwandige Kohlenstoffnanoröhrchen oder eine Kombination dieser zwei sind.

4. Rotorblatt einer Windkraftanlage nach einem der vorhergehenden Ansprüche, wobei die Außenfläche des Rezeptors mit einem oder mehreren ein elektrisches Feld verstärkenden Vorsprüngen versehen ist.

5. Rotorblatt einer Windkraftanlage nach Anspruch 4, wobei der eine bzw. die mehreren ein elektrisches Feld verstärkenden Vorsprünge einen oder mehrere spitze Vorsprünge umfassen, die im Allgemeinen von der Außenfläche nach außen weisen.

6. Rotorblatt einer Windkraftanlage nach Anspruch 4, wobei der eine bzw. die mehreren ein elektrisches Feld verstärkenden Vorsprünge bogenförmige Vorsprünge umfassen.

7. Rotorblatt einer Windkraftanlage nach Anspruch 4, wobei der eine bzw. die mehreren ein elektrisches Feld verstärkenden Vorsprünge eine im Allgemeinen wellenförmige Außenfläche darstellen.

8. Rotorblatt einer Windkraftanlage nach Anspruch 4, wobei der eine bzw. die mehreren ein elektrisches Feld verstärkenden Vorsprünge zylinderförmige Vorsprünge umfassen.

9. Rotorblatt einer Windkraftanlage nach einem der Ansprüche 2-8, wobei die Schicht aus Kohlenstoffnanoröhrchen Kohlenstoffnanoröhrchen umfasst, die im Wesentlichen lotrecht entlang Richtungen ausgerichtet sind, die senkrecht zu einer Oberflächenebene der Außenfläche angeordnet sind.

10. Rotorblatt einer Windkraftanlage nach einem der vorhergehenden Ansprüche, wobei mindestens eine Gruppe Kohlenstoffnanoröhrchen in einer Richtung ausgerichtet ist, die sich entlang einer Dicke des Rezeptors erstreckt.

11. Rotorblatt einer Windkraftanlage nach einem der vorhergehenden Ansprüche, wobei die Kohlenstoffnanoröhrchen in einer kontinuierlichen Metallmatrix verteilt sind.

12. Windkraftanlagengenerator, umfassend ein oder mehrere Rotorblätter, wobei jedes Rotorblatt ein Rotorblatt nach einem der vorhergehenden Ansprüche ist.

13. Verfahren zur Herstellung eines Rotorblatts einer Windkraftanlage mit Blitzschutzsystem nach einem der Ansprüche 1 bis 11, wobei das Verfahren umfasst:
- Bereitstellen eines Rotorblatts einer Windkraftanlage mit einer Rezeptorposition zur Aufnahme eines Blitzrezeptors;
- Bereitstellen des Blitzrezeptors;
- Anbringen des Rezeptors in der Rezeptorposition auf dem Rotorblatt;
- Herstellen einer elektrischen Verbindung von den Blitzrezeptoren zu einem elektrischen Ableiter.

14. Verfahren nach Anspruch 13, wobei die Kohlenstoffnanoröhrchen auf der Außenfläche der Blitzrezeptoren durch Bereitstellen von Inseln oder Teilchen eines katalytischen Materials auf der Außenfläche und Züchten der Kohlenstoffnanoröhrchen aus diesem katalytischen Material gezüchtet werden.

## Revendications

1. Pale de rotor d'éolienne comprenant un système de protection contre la foudre, dans laquelle le système de protection contre la foudre comprend un récepteur de foudre disposé dans la pale de rotor, **caractérisée en ce que** le récepteur de foudre comprend des nanotubes de carbone.

2. La pale de rotor d'éolienne selon la revendication 1, dans laquelle les nanotubes de carbone sont situés au niveau d'une surface externe sous la forme d'une couche de nanotubes de carbone et/ou sous une forme dans laquelle au moins une partie du récepteur de foudre est constituée d'un matériau composite en métal et nanotubes de carbone.

3. La pale de rotor d'éolienne selon l'une quelconque des revendications précédentes, dans laquelle les nanotubes de carbone sont des nanotubes de carbone monoparoi, des nanotubes de carbone multiparoi ou une combinaison des deux.

4. La pale de rotor d'éolienne selon l'une quelconque des revendications précédentes, dans laquelle la surface externe du récepteur est munie d'une ou plusieurs protubérances de renforcement du champ électrique.

5. La pale de rotor d'éolienne selon la revendication 4, dans laquelle les une ou plusieurs protubérances de renforcement du champ comprennent une ou plusieurs protubérances pointues pointant généralement de la surface externe vers l'extérieur.

6. La pale de rotor d'éolienne selon la revendication 4, dans laquelle les une ou plusieurs protubérances de renforcement du champ comprennent des protubérances en forme d'arc.

7. La pale de rotor d'éolienne selon la revendication 4, dans laquelle les une ou plusieurs protubérances de renforcement du champ constituent une surface externe généralement en forme d'onde.

8. La pale de rotor d'éolienne selon la revendication 4, dans laquelle les une ou plusieurs protubérances de renforcement du champ comprennent des protubérances en forme de cylindre.

9. La pale de rotor d'éolienne selon l'une quelconque des revendications 2 à 8, dans laquelle la couche de nanotubes de carbone comprend des nanotubes de carbone qui sont pour l'essentiel alignés verticalement dans des directions perpendiculaires à un plan de surface de la surface externe.

10. La pale de rotor d'éolienne selon l'une quelconque des revendications précédentes, dans laquelle au moins un ensemble de nanotubes de carbone est orienté dans une direction s'étendant le long d'une épaisseur du récepteur.

11. La pale de rotor d'éolienne selon l'une quelconque des revendications précédentes, dans laquelle les nanotubes de carbone sont dispersés dans une matrice métallique continue.

12. Génératrice éolienne comprenant une ou plusieurs pales de rotor, chaque pale de rotor étant une pale de rotor selon l'une quelconque des revendications précédentes.

13. Méthode de fabrication d'une pale de rotor d'éolienne munie d'un système de protection contre la foudre selon l'une quelconque des revendications 1 à 11, la méthode comprenant :
- apport d'une pale de rotor d'éolienne possédant un emplacement de récepteur destiné à recevoir un récepteur de foudre ;
- apport du récepteur de foudre ;
- montage du récepteur dans l'emplacement de récepteur sur la pale de rotor ;
- établissement d'un contact électrique des récepteurs de foudre vers un conducteur de descente.

14. La méthode selon la revendication 13, dans laquelle la croissance des nanotubes de carbone est réalisée sur la surface externe des récepteurs de foudre par apport d'îlots ou de particules d'un matériau catalytique sur la surface externe et croissance des nanotubes de carbone à partir du matériau catalytique.
